# EUROPEAN PATENT SPECIFICATION

(11) **EP 3 753 320 B1**
(45) Date of publication and mention of the grant of the patent: **24.01.2024**
(21) Application number: 19702887.1
(22) Date of filing: 31.01.2019
(51) Int. Cl.: H04W 68/00

(54) **ELECTRONIC DEVICE, INFRASTRUCTURE EQUIPMENT AND METHOD TO TRANSMIT A PAGING MESSAGE**
ELEKTRONISCHE VORRICHTUNG, INFRASTRUKTURAUSRÜSTUNG UND VERFAHREN ZUR ÜBERTRAGUNG EINER FUNKRUFNACHRICHT
DISPOSITIF ÉLECTRONIQUE, ÉQUIPEMENT D'INFRASTRUCTURE ET PROCÉDÉ DE TRANSMISSION D'UN MESSAGE DE RADIOMESSAGERIE

(30) Priority: 15.02.2018 EP 18156916
(43) Date of publication of application: 23.12.2020
(73) Proprietor: Sony Group Corporation, Tokyo 108-0075 (JP); Sony Europe Limited, Weybridge, Surrey KT13 0XW (GB)
(72) Inventor: WEI, Yuxin, Basingstoke, Hampshire RG22 4SB (GB); SHARMA, Vivek, Basingstoke, Hampshire RG22 4SB (GB); WAKABAYASHI, Hideji, Basingstoke, Hampshire RG22 4SB (GB); TSUDA, Shinichiro, Basingstoke, Hampshire RG22 4SB (GB)
(74) Representative: MFG Patentanwälte Meyer-Wildhagen Meggle-Freund Gerhard PartG mbB
(86) International application number: PCT/EP2019/052408
(87) International publication number: WO 2019/158368

(56) References cited:
- SAMSUNG: "System Information Update in NR", 3GPP DRAFT; R2-1801884_SI UPDATE IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 14 February 2018 (2018-02-14), XP051399023, Retrieved from the Internet: URL:http://www.3gpp.org/ftp/tsg%5Fran/WG2% 5FRL2/TSGR2%5F101/Docs/ [retrieved on 2018-02-14]
- MEDIATEK INC: "Discussion on remaining system information delivery", 3GPP DRAFT; R1-1704438 DISCUSSION ON REMAINING SYSTEM INFORMATION DELIVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Spokane, USA; 20170403 - 20170407 2 April 2017 (2017-04-02), XP051242585, Retrieved from the Internet: URL:http://www.3gpp.org/ftp/Meetings_3GPP_ SYNC/RAN1/Docs/ [retrieved on 2017-04-02]
- QUALCOMM EUROPE: "Granularity of information at SIB modification", 3GPP DRAFT; R2-085587, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080923, 23 September 2008 (2008-09-23), XP050320391, [retrieved on 2008-09-23]

## Description

### TECHNICAL FIELD

The present disclosure generally pertains to an infrastructure equipment an electronic device and a method as defined in the appended set of claims.

### TECHNICAL BACKGROUND

Several generations of mobile telecommunications systems are known, e.g. the third generation ("3G"), which is based on the International Mobile Telecommunications-2000 (IMT-2000) specifications, the fourth generation ("4G"), which provides capabilities as defined in the International Mobile Telecommunications-Advanced Standard (IMT-Advanced Standard), and the current fifth generation ("5G"), which is under development and which might be put into practice in the year 2020.

A candidate for providing the requirements of 5G is the so called Long Term Evolution ("LTE"), which is a wireless communication technology allowing high-speed data communications for mobile phones and data terminals and which is already used for 4G mobile telecommunications systems. Other candidates for meeting the 5G requirements are termed New Radio Access Technology Systems (NR). An NR can be based on LTE technology, just as LTE was based on previous generations of mobile communications technology.

LTE is based on the GSM/EDGE ("Global System for Mobile Communications"/"Enhanced Data rates for GSM Evolution" also called EGPRS) of the second generation ("2G") and UMTS/HSPA ("Universal Mobile Telecommunications System"/"High Speed Packet Access") of the third generation "3G") network technologies.

LTE is standardized under the control of 3GPP ("3rd Generation Partnership Project"). There exists a successor LTE-A (LTE Advanced) allowing higher data rates as the basis LTE which is also standardized under the control of 3GPP.

For the future, 3GPP plans to further develop LTE-A, such that it will be able to fulfill the technical requirements of 5G. As the 5G system will be based on LTE or LTE-A, respectively, it is assumed that specific requirements of the 5G technologies will, basically, be dealt with by features and methods which are already defined in the LTE and LTE-A standard documentation.

Current technical areas of interest to those working in the field of wireless and mobile communications are known as the "Internet of Things", or loT for short, and "Machine to Machine Communication" (M2M), or Machine Type Communication (MTC). The 3GPP has proposed to develop technologies for supporting narrow band (NB)-IoT using an LTE or 4G wireless access interface and wireless infrastructure. Such IoT devices are expected to be low complexity and inexpensive devices requiring infrequent communication of relatively low bandwidth data. It is also expected that there will be an extremely large number of IoT devices which would need to be supported in a cell of the wireless communications network.

Unmanned Aerial Vehicles (UAV), more commonly referred to as "Drones", are aircrafts that operate with various degrees of autonomy, e.g. under remote control by a human operator or autonomously by onboard micro controller. The remote control of drones may be based on a usage of cellular networks in a regulatory manner. Consequently, a support of cellular communication could be foreseen for drones.

Typically, in LTE and NR, the system information elements are broadcast in system information blocks (SIBs). A system information block groups together system information elements of the same nature.

In 3GPP Tdoc R2-1711510, 3GPP TSG-RAN WG2 meeting #99 bis, Prague, Czech Republic, 9-13 October 2017: "Dedicated signalling of SI upon UE mobility" the transfer of system information (SI) during the baseline handover procedure is discussed. Scenarios are mentioned in which the network pushes SI to UE by dedicated signaling. It is suggested to signal complete system information blocks (SIBs) also in case of UE mobility and to include information regarding the SI used in the target cell in the Handover command. Furthermore, according to 3GPP Tdoc R2-1711510, it has been suggested that a source node provides information regarding on-demand SI to a target node to enable it to provide such SI during handover. The transfer of on-demand SI request is initiated mainly from the UE while there may be situations where the network side has additional SI to push to UEs.

The document 3GPP Draft; R2-1801884, SAMSUNG: "System Information Update in NR",vol. RAN WG2, no. Athens, Greece; 20180226 - 20180302 14 February 2018, discusses the SI update procedure in NR.

The document R1-1704438, MEDIATEK INC: "Discussion on remaining system information delivery",vol. RAN WG1, no. Spokane, USA; 20170403 - 20170407 2 April 2017, provide further discussion on considerations of PBCH and minimum system information delivery.

The document 3GPP R2-085587, QUALCOMM EUROPE: "Granularity of information at SIB modification", 20080923, 23 September 2008, discloses granularity of information at SIB modification.

In view of this background, an efficient system information (SI) delivery for UEs is needed.

### SUMMARY

According to the present disclosure, there is provided an infrastructure equipment, an electronic device and a method as defined in the appended set of claims.

Further aspects are set forth in the dependent claims, the following description and the drawings.

### BRIEF DESCRIPTION OF THE DRAWINGS

Embodiments are explained by way of example with respect to the accompanying drawings, in which:
Fig. 1a illustrates the LTE RRC state diagram;
Fig. 1b illustrates RRC States in 5G New Radio (5GNR);
Fig. 2 illustrates a network architecture for cell coverage for terrestrial UEs;
Fig. 3 illustrates a network architecture for cell coverage for UAV aerial cell coverage
Fig. 4 schematically describes the message flow used for a network push of system information;
Fig. 5 illustrates the content of a paging message according to an embodiment;
Fig. 6 illustrates an information element Paging_record_list according to an embodiment;
Fig. 7 illustrates an information element Network_Push_SIB_Information according to an embodiment;
Fig. 8 illustrates an information element SIB_MappingInfo according to an embodiment;
Fig. 9a shows an embodiment of the SIB_Broadcast_timing IE that involves information on when and how long the SI will be provided;
Fig. 9b shows a further embodiment of the SIB_Broadcast_timing IE that involves information on when and how long the SI will be provided;
Fig. 10 shows an embodiment of the Target_UE_List;
Fig. 11 illustrates an information element Network_Push_SIB_Information that relates to the transmission of multiple umbrella SIBs;
Fig. 12 illustrates a process of a network/eNB/gNB pushing system information (SI);
Fig. 13 illustrates a process of a UE receiving a paging message;
Fig. 14 shows a schematic block diagram of a communications path between an UE and an eNB/gNB; and
Fig. 15 shows an embodiment of a controller for a UE or for an eNB/gNB.

### DETAILED DESCRIPTION OF EMBODIMENTS

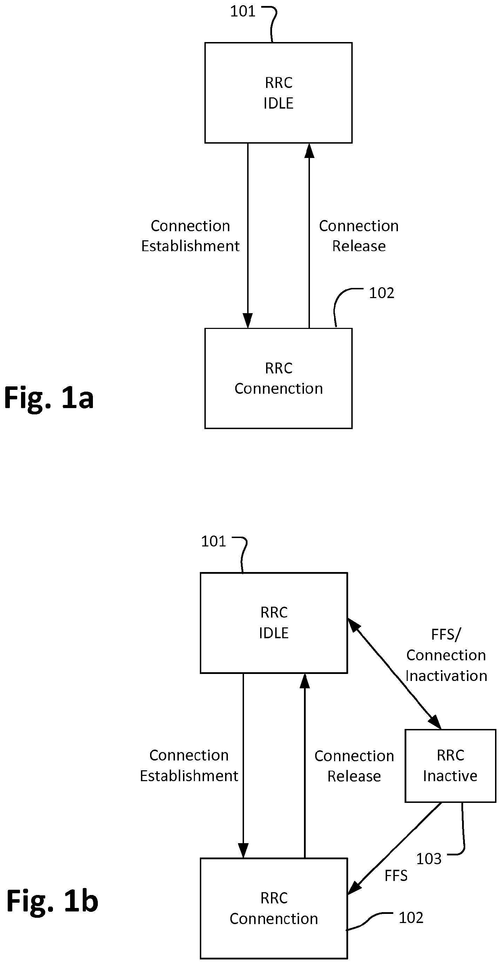

Before a detailed description of the embodiments under reference of Fig. 1, general explanations are made.

The embodiments disclose an infrastructure equipment comprising circuitry configured to transmit a paging message to a user equipment, the paging message comprising provided to notify the user equipment that the infrastructure equipment will send system information to the user equipment.

The infrastructure equipment may also be referred to as a base station, network element such as an entity of a core network, an enhanced Node B (eNodeB, or eNB) or a coordinating entity for example, and may provide a wireless access interface to one or more communications devices within a coverage area or cell. The infrastructure equipment may for example be any entity of a telecommunications system, e.g. an entity of a New Radio Access Technology Systems, e.g. next Generation' Node B (gNB).

A User Equipment (UE) may be any device that is related to an end-user or to a terminal to communicate in e.g. a Universal Mobile Telecommunications System (UMTS) and 3GPP Long Term Evolution (LTE, or aLTE) system. The UE may support the New Radio Access Technology Systems in addition to the legacy system such as LTE, and other advancements. The User Equipment (UE) may also be a machine type communication (MTC) terminal.

The User Equipment (UE) may in particular be an aerial UE. An aerial UE may for example be an UE that is provided in, on or at an aerial vehicle. An aerial device may for example be an Unmanned Aerial Vehicles (UAV) (a "Drone"), or aircrafts that operate with various degrees of autonomy, e.g. under remote control by a human operator or autonomously by an onboard micro controller. An aerial UE may be a mobile communications device that is configured to communicate data via the transmission and reception of signals representing data using a wireless access interface. In the context of this application, the term aerial UE is also used for an electronic device that is autonomously or semi-autonomously operating in an aerial device, without the operator (or "user") of the device being required to be located at or close to the device. The term User Equipment (UE) thus also relates to equipment where the user is located remote to the equipment.

Circuitry of an infrastructure equipment may include at least one of: a processor, a microprocessor, a dedicated circuit, a memory, a storage, a radio interface, a wireless interface, a network interface, or the like, e.g. typical electronic components which are included in a base station, such as an eNodeB.

The circuitry of the infrastructure equipment may for example be configured to deliver the assistance information received from the target base station to the UE within an RRC connection reconfiguration message. The RRC connection reconfiguration message is a command to modify an RRC connection. A purpose of the RRC connection reconfiguration message may for example be to establish/modify/release Radio Bearers, e.g. to perform handover (handover command).

The infrastructure equipment may initiate transfer of certain SI to the UE by dedicated signalling (network push) i.e. other than mobility and transition to RRC inactive. In contrast to the on demand SI in LTE and 5G New Radio (5GNR), where SI is delivered mainly according to a UE's request, by means of the paging message, the eNB/gNB may initially trigger the transmission of system information (e.g. umbrella SIB) after deploying a new service.

The mobile telecommunications system may be a 2G, a 3G, a LTE or a 5G New Radio (5GNR)

System information (SI) may be broadcasted by an eNB/gNB over logical channel BCCH. This logical channel information may for example be further carried over transport channel BCH or carried by DL-SCH. System Information may be transmitted in the form of blocks (SIBs) that are grouped in SI containers. SIBs may for example be transmitted using BCCH mapped on DL-SCH which in turn mapped on PDSCH. System information may for example be changed every BCCH modification period.

The circuitry of the infrastructure equipment may for example be configured to broadcast the paging message to user equipment in an RRC inactive state.

For positioning assistance system information, network need to push the related updated or even new positioning scheme related information to the UEs. The updated information may impact all the UEs no matter in RRC connected state, RRC idle state or RRC inactive state.

The circuitry of the infrastructure equipment may for example be configured to broadcast the paging message to user equipment in an RRC idle state.

The circuitry of the infrastructure equipment may for example be configured to broadcast the paging message to user equipment in an RRC connected state.

The paging message may notify the UE a new umbrella SIB is on schedule, and one bit in the paging message may indicate to disable the previous stored push SI.

The information of the paging message may comprise service indication information. The SIB service indication may have the purpose of indicating a specific service to which system information pushed as an umbrella SIB relates. The SIB service indication may for example be an identifier that refers to a known SIB structure. The SIB service indication may for example be a positioning assistance information, network need to push the related updated or even new positioning scheme related information to the UEs. The updated information may impact all the UEs no matter in RRC connected state, RRC idle state or RRC inactive state.

The information of the paging message may comprise SIB structure information. The SIB structure information may have the purpose of indicating the SIB structure to the UEs. For example, in LTE and 5GNR, it is supposed that SI is composed as various predefined SIBs (e.g. SIB1 to SIB21). The paging message used to notify about the transmission of an umbrella SIB may comprise SIB structure information in the form of a bitmap that corresponds with one or several these predefined SIBs.

The information of the paging message comprises a SIB validity duration information. The SIB validity duration information may have the purpose of indicating the validity duration of the SIB.The SIB validity duration information may for example be the information how long the SI will remain valid. The SIB validity duration information may give the maximum flexibility for the network to manage its services and corresponding SI.The umbrella SIB may thus be provided dynamically or temporarily.

The infrastructure equipment may choose to activate/deactivate this services dynamically e.g. according to its antenna configuration and network load etc.

Furthermore, the infrastructure equipment may only want to provide a certain service within a defined period of time depending on some factors. E.g. the network may only want to provide a VR (virtual reality) service when it is in a low traffic load etc.

The infrastructure equipment may activate a service for a period of time e.g. only provide VR services when the network load is low etc. or the umbrella SIB may only be valid for a predefined time period. Umbrella SIB could deal with this requirement by providing the validity duration and umbrella SIB transmission time duration information in the paging notification.

The information of the paging message comprises a broadcast timing information. The broadcast timing information has the purpose of indicating when and how long the SI will be provided or the provision time. The provision time may be the indication of when the network broadcast of the SIB will start. The broadcast timing information may for example be a broadcast live time of the paging message or a time that indicates when the infrastructure equipment will start to transmit the umbrella SIB.

The information of the paging message may comprise a target list information. The target list information may have the purpose of indicating the target UE/UAV, where the information may be tran-mitted. The target list information may for example be an ID list of the UEs.

The circuitry of the infrastructure equipment may for example be configured to send system information corresponding to the information in the paging message to user equipment.

The umbrella SIB/ push SIB may be cell specific, so only the cell who wants to deliver the special service related SI will initiate the transmission. To address all the inactive UEs in the cell, the paging message may be sent on every paging occasion.

The circuitry of the infrastructure equipment may further be configured transmit the system information (SIB) in the form of an umbrella SIB.

The system information (e.g. umbrella SIB) may for example be transmitted on a broadcast channel.

The push SI may for example be transmitted as a normal SIB, e.g. scheduling information for the transmission of an umbrella SIB may be included in SIB1 and the transmission of the umbrella SIB may be scheduled accordingly. Delta signaling may be supported.

The infrastructure may thus be configured to initially trigger the transmission of an umbrella SIB.

The umbrella SIBs may for example, include system information related to a new service.

When the network supports a new service, e.g. MBMS, D2D, VR, etc., new system information blocks will be added accordingly. To optimize such operation a new system information block (umbrella SIB/ push SIB) is introduced and this system information block can accommodate any new system information corresponding to the newly deployed services by network.

The push SI may be applicable to slices as well. Each slice may include several services, in that case multiple SIBs may be included. Hence it is up to network's implementation that to include multiple SIBs information in one paging notification or send multiple paging messages A new service may for example services/operations for forward compatibility. The umbrella SIB may accommodate new system information for future introduced services by providing additional information.

The infrastructure equipment may not add one SIB each time when a new service is launched, instead a forward compatible and generalized SIB may be designed in order to address all the new service related system information.

The embodiments also disclose an electronic device comprising circuitry configured to receive a paging message from an infrastructure equipment, the paging message comprising information provided to notify the electronic device that the infrastructure equipment will send system information to the user equipment.

The electronic device may be in a RRC inactive state.

The electronic device may be in a RRC idle state or RRC connected state.

Circuitry of an electronic device may be configured to receive system information corresponding to the information in the paging message.

Circuitry of an electronic device may be further configured to receive the system information (SIB) in the form of an umbrella SIB.

The electronic device may be an unmanned aerial vehicle.

The embodiments also describe a method comprising transmitting a paging message from an infrastructure equipment to a user equipment, the paging message comprising information provided to notify the user equipment that the infrastructure equipment will send system information to the user equipment.

The embodiments also describe a computer program causing a processor and/or circuitry to perform the methods described above, when being carried out on the computer and/or circuitry.

The embodiments also describe a non-transitory computer-readable recording medium storing a computer program product causing a processor and/or circuitry to perform the methods described above, when being carried out on a computer and/or circuitry.

### RRC inactive State

The Radio Resource Control (RRC) protocol is used in UMTS and LTE on the Air interface. RRC is located on the third layer and provides the signaling between the user equipment (UE)/ unmanned aerial vehicle (UAV) and the UMTS Terrestrial Radio Access Network (UTRAN)/ Evolved UMTS Terrestrial Radio Access Network (E-UTRAN).

The functions of the RRC protocol include connection establishment and termination as well as the operation and control of the connection between the named components. In order to support a required quality of service (QoS), several radio links to a subscriber device can be set up at the same time. In addition, the RRC protocol provides paging, broadcast and messages between UTRAN/ E-UTRAN and user equipment, transmission power control and encryption.

The operation of the RRC is guided by a state machine, which defines certain specific states that a UE may be present in.

Fig. 1a illustrates an RRC state diagram for UE/UAV compliant to the LTE standard. The RRC state diagram comprises an RRC idle state 101 (RRC_IDLE) and an RRC connected state 102 (RRC_CONNECTED). A UE is in RRC connected state 102 when an RRC connection is established. If no RRC connection is established the UE is in RRC idle state 101. In the RRC idle state 101, a UE/UAV is known in the Evolved Packet Core (EPC) and has IP address but it is not known in E-UTRAN/eNB (LTE base station). A UE/UAV can receive broadcast or multicast data, in the RRC idle state 101. The UE/UAV monitors a paging channel to detect incoming calls and performs neighbor cell measurements, and does cell selection as well as reselection and acquires system information. In the RRC connected state 102, a UE/UAV is known to both 5G CORE and E-UTRAN/eNB. Location of UE/UAV is known at the cell level. Mobility is UE/UAV assisted and is network controlled. An LTE UE/UAV monitors control channels associated with shared data channel to deter-mine if the data is scheduled for it or not. The Channel quality feedback information is also provided by the UE/UAV after measurements. It also performs neighbor cell measurements of UTRAN, E-UTRAN and GSM cells.

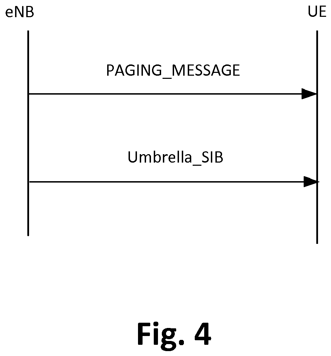

Fig. 1b illustrates the RRC states in 5G New Radio (5GNR). In addition to RRC idle state 101 and RRC connected state 102, 5G NR comprises another RRC state named RRC inactive state 103 (RRC_INACTIVE). When UE/UAV is powered up it is in RRC inactive state 103 or RRC idle state 101, it can move to RRC connected state 102 with initial attach or with connection establishment. If there is no activity from UE/UAV for a short time, it can suspend its session by moving to RRC inactive state 103 and it can resume its session moving to RRC connected state 102. A UE/UAV can move to RRC idle state 101 from RRC connected 102 or RRC inactive state 103 (a UE/UAV cannot move to RRC inactive state 103 from RRC idle state 101 because inactive state needs the initial setup of context). In order to reduce the signaling cost, UEs can be in RRC inactive state instead of RRC connected. The paging message of the embodiments described below (see PAGING_MESSAGE of Fig. 4) can reach a UE to notify the UE that new system information (see Umbrella_SIB of Fig. 4 described below) is going to be delivered instead of the dedicated signaling for the UEs in RRC connected.

### Cell coverage for terrestrial UEs

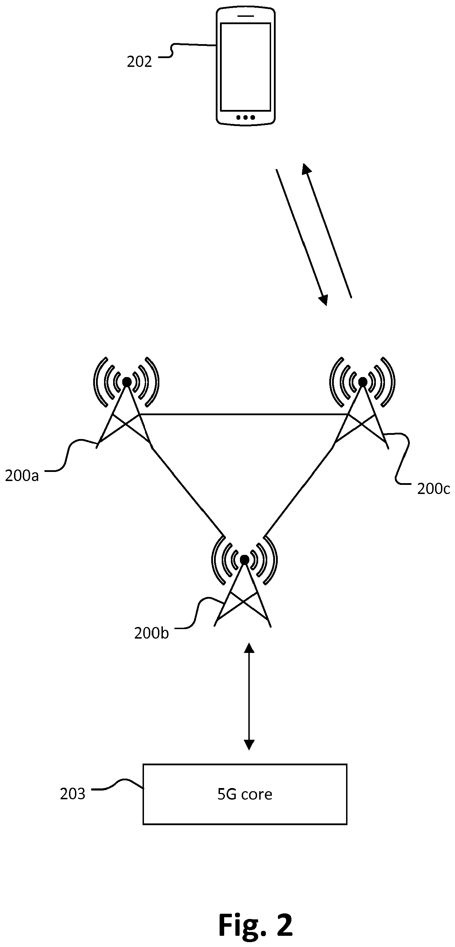

Fig. 2 discloses a network architecture for cell coverage for terrestrial UEs, here as an exemplifying LTE architecture. The network architecture comprises a UE 202, three gNB 200a, 200b, 200c, and a 5G core 203.

The 5G core 203 communicates with packet data networks in the outside world such as the Internet, private corporate networks or the IP multimedia subsystem. The internal architecture of the UE 203 for 5GNR is identical to the one used by UMTS and GSM which is actually a Mobile Equipment (ME). The gNB 200a, 200b, 200c handles the radio communications between the UE and the 5G CORE. Each gNB 200a, b, c is a base station that controls UEs in one or more cells. The base station 200c that is communicating with a UE 202 is known as its serving gNB 200c. The gNB 200c sends and receives radio transmissions to all the UE 202 using the analogue and digital signal processing functions. Each gNB 200 controls the low-level operation of all its mobiles, by sending them signaling messages such as handover commands

### Aerial cell coverage

Cellular systems are designed by deploying eNB/gNBs so that each cell coverage for terrestrial UEs can be regarded as a unit for mobility management such as handover in connected mode or cell selection/reselection in idle mode. This cell coverage for terrestrial UEs can be treated as static coverage provided by transmission of cell specific reference signal (CRS) or Common Reference Signal.

Areal cell coverage for UAVs can be a static coverage similar to that for terrestrial UEs. However, from a perspective of minimization of interference to neighboring cells and efficient usage of radio resources, areal cell coverage for aerial vehicles can be provided in a dynamic manner.

In the embodiments described below in more detail, the term "areal cell coverage" is used to refer to a second coverage ("aerial cell coverage") that is provided by an eNB/gNB to UAVs, in addition to a first coverage (or "terrestrial cell coverage") that is provided by the eNB/gNB to terrestrial UEs.

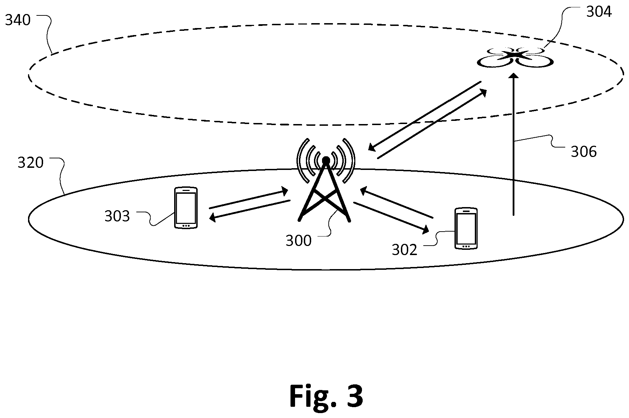

Fig. 3 discloses an embodiment in which an eNB/gNB 300 that is designed based on currently deployed base stations for cellular systems builds a different type of cell coverage ("aerial cell coverage") for UAVs in addition to the normal cell coverage ("terrestrial cell coverage") for terrestrial UEs. In Fig. 3, eNB/gNB 300 provides terrestrial UEs 302, 303 with a cell coverage 320 for terrestrial UEs and eNB/gNB 200 provides an aerial vehicle 304 comprising an UAV with a cell coverage 340 for UAVs. This "areal cell coverage" may adapt to the varying size of coverage provided by eNB/gNB 300 depending on the height 306 of flying aerial vehicle 304.

As the number of visible cells may depend on the height 306 of aerial vehicle 304, in connected mode, the transmission power from eNB/gNB 300 and/or from aerial vehicle 304 may be controlled depending on the height of aerial vehicle 304. For example, the transmission power from eNB/gNB 300 and/or from aerial vehicle 304 may be controlled in a way that the area of areal cell coverage provided by eNB/gNB 300 remains almost the same size regardless of the height 306 of aerial vehicle 304. Accordingly, the same deployment philosophy for mobility management may be applied regardless of height of aerial vehicle 304. This may allow eNB/gNBs to be geometrically deployed so that efficient mobility can be performed.

Most of the UAVs are equipped with a GNSS (Global Navigation Satellite System) like GPS or any other accurate positioning function. In order to allow for a dynamic control of the areal cell coverage provided by the eNB/gNB, an aerial vehicle 304 may report its altitude (height) to eNB/gNB 300. For example, aerial vehicle 204 can report a value of altitude measured via GPS (Global Positioning System) or a height measured via pressure sensor to eNB/gNB 300. The eNB/gNB 300 may have a database storing a relation between areal cell coverage and the coordination of eNB/gNB position. For example, the site information database stores the cell ID, eNB/gNB coordination, cell radius, transmission power, antenna configuration, and so on. This information is originally for terrestrial cell coverage, but it could be useful for areal carrier. When an eNB/gNB receives the position of an aerial vehicle, the eNB/gNB calculates the cell coverage area according to the information in the database. Then, the eNB/gNB checks whether the aerial vehicle is within the calculated cell coverage area or not. Alternatively, the UE may receive a subset of that database in a neighbor area of its current position from the network in advance. For example, the site database may accommodate all eNB/gNBs information. It may be too large to store in the UE. The site database picks up the information of nearest eNB/gNB from the current aerial vehicle position and its neighbor eNB/gNBs of the nearest eNB/gNB, which is called here a "neighbor area". The eNB/gNB may send the selected eNB/gNBs information from the data base to aerial vehicle. The aerial vehicle may calculate the cell coverage of a nearest eNB/gNB and its neighbor eNB/gNBs as well. This may be the calculated cell coverage, also called "zone".

An eNB/gNB as described above may thus have the latest/accurate location of UAVs. eNB/gNBs regularly update the location information to MME or to a location server of UAVs. MME/location server may provide this information to an external server of air traffic control. Vice versa, the external server might send the information/direction from traffic control to UAV via MME.

### "Network Push" of system information (SI) using paging notifications in the RRC inactive state

In certain cases, the eNB/gNB 200 may wish to push system information (SI) to UEs in RRC inactive state. However, UEs/UAVs in RRC inactive state cannot be addressed by dedicated signalling (network push as described for example in Tdoc R2-1711510). The embodiments described below in more detail thus provide an alternative process of "pushing" system information to specific UEs/UAVs. In particular, the process described below realizes a network "push" by combining a transmission of a system information block (SIBs) on a broadcast channel and notifying a specific UE/UAV about the transmission of the SIB by means of a paging message.

As already described above an eNB/gNB may wish to push system information (SI) to an UE/UAV in RRC inactive state. For example, for UAVs, the network may need to deliver certain specific information in order to support the UAV operation, i.e. RACH configuration, positioning assistance information, cell selection/re-selection parameters, etc. This may in particular be required when the network chooses to activate/deactivate services dynamically e.g. according to its antenna configuration and network load etc.

In addition to the services currently available with a network, there may be new services introduced in the future. For example, the eNB/gNB may wish to deliver positioning assistance information or new system information to UEs, or within the framework of Multimedia Broadcast Multicast Service (MBMS) or Device-to-Device communication (D2D), etc. For positioning assistance information, eNB/gNB may need to push the related updated or even new positioning scheme related information to the UEs. For delivering new system information to UEs, the eNB/gNB may push certain system information i.e. a new service, a new operation like cell re-selection for a new service, a new intra-frequency measurement operation/configuration etc.

An eNB/gNB may wish to push system information (SI) to a UE/UAVs or to a machine type communication (MTC) terminals in RRC idle state (or inactive state). For example, the asset tracking device with GNSS may stay idle mode without communication. If a new positioning scheme is available (e.g. beacon signals in private premises/area), the eNB/gNB may push the assistance information to a UE in idle state which has the capability of the new positioning system. In conventional system information requires the pre-defined assistance information in 3PP protocol, thus, it is not flexible. By contrast, this method which is based on notifying the UEs by means of a paging message may provide such flexibility, for example to incorporate a later definition of assistance information.

### "Umbrella SIB" for transmission of system information

According to the embodiments described below, in order to support that an eNB/gNB can push new system information (SI) to UEs, a new type of system information (here called "umbrella SIB") is added to the conventional SIBs. An umbrella SIB may for example include system information of a new service, e.g. new system information for UE/UAV, new system information for positioning or new system information of any other future introduced services. New services and/or operations may be launched in the network gradually and cannot be predicted in advance. An umbrella SIB adds one or more new SIBs, each new SIB being related to a different service or different operation. The concept of umbrella SIBs allows that the eNB/gNB can address the services newly initiated by network and not yet included in the current SI configuration.

The conventional SI update procedure cannot be directly applied to umbrella SIBs, because there will be no specific predefined SIBs corresponding to the new services. According to the embodiments described below in more detail, in order to notify one or more UEs that a new service and a corresponding umbrella SIB will be provided, a new signalling scheme is defined. This new signalling scheme is based on providing new contents by means of conventional signalling processes such as paging and broadcasting.

### Message flow in Network push

According to the embodiments described here, an RRC paging message carries a notification about new system information, the new system then being transmitted in the form of an umbrella SIB.

Fig. 4 schematically describes the message flow used for a network push of system information using a paging message and the broadcasting of an umbrella SIB. An eNB/gNB transmits an RRC paging message to a UE/UAV (or a group of UEs/UAVs). This paging message is configured to notify the UE/UAV(s) about the transmission of an umbrella SIB. The paging message contains information which allows the UE/UAV(s) to identify and read the umbrella SIB. After receipt of the paging message, the UE/UAV(s) will listen to a broadcast channel to receive the umbrella SIB according to the information contained in the paging message.

The RRC paging message is transferred, from the eNB/gNB to the UE/UAV, e.g. using PCCH logical channel, PCH transport channel and PDSCH physical channel or through direct indication information. The RRC paging message may affect one, more, or all of the UE/UAVs in RRC_INACTIVE.

### Paging message

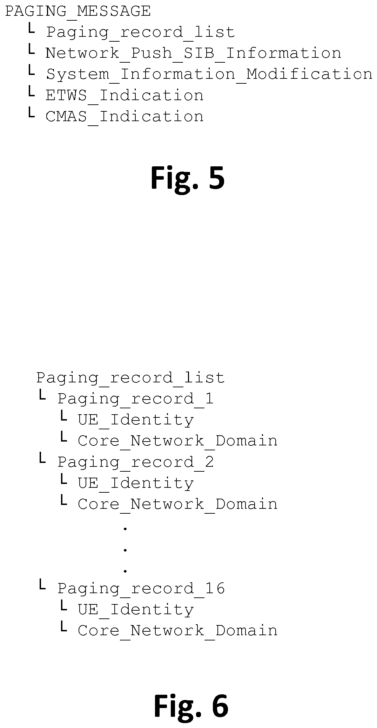

Fig. 5 shows, as an example, the content of a paging message (PAGING_MESSAGE). The paging message comprises as information elements (IEs) a Paging_record_list, a Network_Push_SIB_Information, a System_Information_Modification flag, an ETWS_Indication flag, and a CMAS_Indication flag. The Paging_record_list includes up to 16 paging records, as it is described in more detail with regard to Fig. 5 below. The Network_Push_SIB_Paging_record_list is a record list, which includes information related to the transmission of an umbrella SIB as it is described in more detail with regard to Fig. 6 below. The System_Information_Modification flag is generated by the eNB/gNB and is used to trigger the UE to re-acquire the conventional set of SIBs. The ETWS_Indication flag (ETWS = Earthquake and Tsunami Warning System) is generated by the eNB/gNB. This flag is can be used to trigger UE/UAVs to re-acquire system information related to ETWS content. The Commercial Mobile Alert Service (CMAS) flag is generated by the eNB/gNB and can be used to trigger UE/UAVs to re-acquire system information that relates to CMAS content.

Fig. 6 shows an example of the information element Paging_record_list. This Paging_record_list corresponds to the conventional paging record list. Paging_record_list comprises, according to this example, 16 paging records Paging_record_1, Paging_record_2, ..., Paging_record_16. Each paging record comprises an information element UE_Identiy and an information element Core_Network_Domain. UE_Identity defines the identity of the UE to which the paging message is addressed and Core_Network_Domain indicates Packet Switched (PS) if the paging message is for data transfer or an incoming SMS and the Core Network domain indicates Circuit Switched (CS) value if the paging message is for CS fallback services, e.g., an incoming CS speech call.

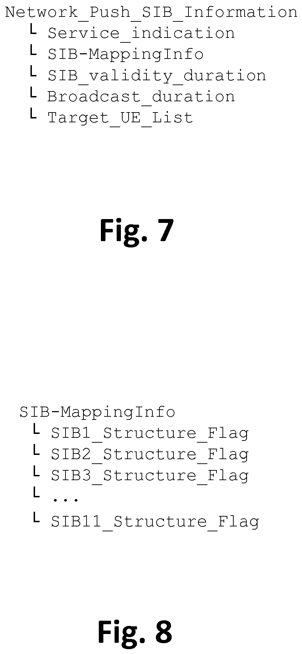

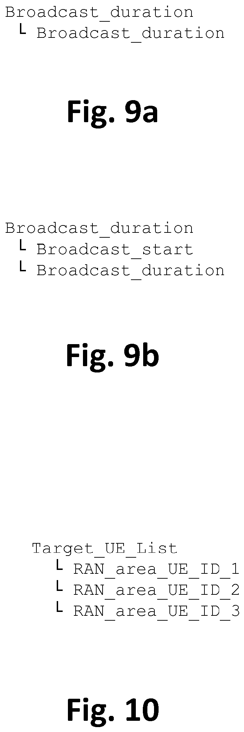

Fig. 7 shows an embodiment of a Network_Push_SIB_Information that relates to the transmission of an umbrella SIB. The Network_Push_SIB_Information comprises an information element Service_indication, an information element SIB-MappingInfo that indicates the structure of the SI to be sent, an information element SIB_validity_duration, an information element SIB_Broadcast_timing, and an information element Target_UE_List. The Service indication message (Service_indication) involves information concerning the purpose of the system information in the umbrella SIB. The Service_indication may for example be an identifier that refers to a specific service such as a positioning information update, a UAV configuration, or any other newly deployed service. If the services supported in the network are included in a minimum SI, then this information can be correlated with that, so only several bits are necessary. If service information is not included in a minimum SI, then a string type message may be needed. The SIB_MappingInfo comprises information concerning the structure of the pushed SI (umbrella SIB) and an ID of the pushed SI (umbrella SIB). An embodiment of SIB-MappingInfo will be described below with regard to Fig. 8. The SIB validity duration message (SIB_validity_duration) involves information of the validity duration of the pushed SI, e.g. in the format of timestamp or duration. It is also possible that the network provides an additional bit or a special value to disable the previous pushed services and/or SIBx related configurations. In this case, a UE has to receive the new umbrella SIB, and delete the previous stored paging message. The Broadcast timing message (SIB_Broadcast_timing) involves information on when the SI will be provided and is described in more detail with regard to Figs. 9a and 9b below. Further, the Network_Push_SIB_Information includes a Target_UE_List IE which identifies the UE/UAVs at which the push SI is directed to. The Target_UE_List IE is described in more detail with regard to Fig. 10 below

Fig. 8 shows an embodiment of the SIB_MappingInfo IE, where each bit relates to a specific conventional SIB structure. SIB_MappingInfo comprises a flag SIB1_Structure_Flag which, if set, indicates a SIB1 structure. SIB_MappingInfo comprises a flag SIB2_Structure_Flag which, if set, indicates a SIB2 structure. SIB_MappingInfo comprises further flags SIB3_Structure_Flag to SIB11_Structure_Flag which, if set, indicate a respective SIB structure. If, for example, the Service indication indicates the radio resource configuration for UAV as service, then the SIB2_Structure_Flag in SIB_MappingInfo may be set to 1 and thus refers to SIB2 The information transmitted later in the umbrella SIB will conform to the SIB2 structure. If Service indication indicates the cell re-selection information for intra/inter-frequency for UAV, SIB3_Structure_Flag may be set to 1. The SIB_MappingInfo thus indicates the SIB3 structure and the information which is later sent in the umbrella SIB will conform to the SIB3 structure.

In the example above, the push SI in an umbrella SIB conforms with the IEs in the corresponding designated conventional SIBs, i.e. SIB2, SIB3 etc. If, however, the push SI relates to a newly defined service that comprises a newly defined SI structure, then the SIB_MappingInfo IE can be omitted. That is, SIB_MappingInfo IE may be optional. In such a case where the push SI relates to a newly defined service, the structure of the new SI (umbrella SIB) corresponding to this new service may be defined in advance and may be communicated to UE/UAVs by other means in relation with a Service_indication identifier that identifies the new service. This information may be stored by each UE/UAV that received this information. UE/UAVs that have received this information may then use the Service_indication identifier in Network_Push_SIB_Information and refer the prestored information about the SIB structure of the new service to decode the network push SI.

Fig. 9a shows an embodiment of the SIB_Broadcast_timing IE that involves information on when and how long the SI will be provided. According to this embodiment, the network immediately starts to transmit the umbrella SIB after the notification, and the notification paging message includes the Broadcast live time of the paging message in the format of a duration. Broadcast_duration comprises an information element Broadcast_duration which indicates the duration of the broadcast.

Fig. 9b shows a further embodiment of the SIB_Broadcast_timing IE that involves information on when and how long the SI will be provided. According to this embodiment, the network delays the transmission of the umbrella SIB after the notification. In this case where the network does not immediately transmit the umbrella SIB after the notification, the SIB_Broadcast_timing message involves information Broadcast_start information which defines when the network will start to transmit the umbrella SIB, in addition to Broadcast_duration which indicates the duration of the broadcast.

Fig. 10 shows an embodiment of the Target_UE_List information element which identifies the UE/UAVs to which the push SI is directed. The Target_UE_List comprises information elements RAN area UE ID_1, which identifies on the RAN level a first UE to which the umbrella SIB is addressed. RAN_area_UE_ID_2, identifies on the RAN level a second UE to which the umbrella SIB is addressed. RAN_area_UE_3, identifies on the RAN level a third UE to which the umbrella SIB is addressed. For example, if the network knows the characteristics of specific UEs, i.e. that the UEs are UAVs with high demanding positioning requirement, then the network can include the target UEs identification information (e.g. RAN area UE identifiers, which are designated for each UE in a RAN area) of these specific UEs in the form of paging record list into the paging message. Then only the UEs designated in the paging record list will be triggered to receive the corresponding pushed SI (umbrella SIB(s)). For example a UE's RESUME_ID (used for RRC connection resume procedure) may be used as the RAN area UE identifier to identify the UE at the RAN level. A RAN area can cover a single or multiple cells and can be smaller than CN area.

The Target_UE_List may be optional. According to an alternative embodiment, the paging message will be sent on the paging occasions corresponding to those specific UEs and Target_UE_List can be omitted.

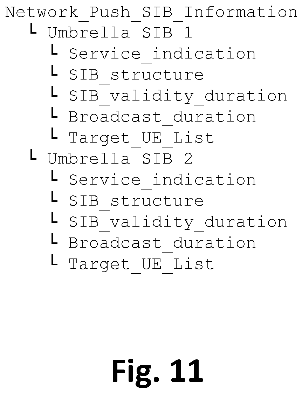

Fig. 11 shows an embodiment of a Network_Push_SIB_Information that relates to the transmission of multiple umbrella SIBs. The Network_Push_SIB_ Information comprises a first umbrella SIB IE (Umbrella SIB_1) and a second umbrella SIB IE (Umbrella_SIB_2). Each of the umbrella SIBs comprises a respective information element Service_indication, a respective information element SIB_structure, a respective information element SIB_validity_duration, an respective information element Broadcast_duration, and a respective information element Target_UE_List.

For example, the Umbrella SIB_1 may serve the positioning information with a SIB 2 based structure, wherein the SIB validity duration is 1 hour, the broadcast duration is for 10 seconds, and the SI is targeted at a first group of UE/UAVs which are identified by Target_UE_List of Umbrella_SIB_1. he Umbrella_SIB_2 may serve cell re-selection information for intra/inter-frequency for UAV with a SIB 3 based structure, wherein the SIB validity duration is 2 hours, the broadcast duration is 1 seconds, and the SI is targeted at a second group of UE/UAVs which are identified by Target_UE_List of Umbrella_SIB_2.

These embodiments may make use of the characteristics of the UEs in inactive state that the network may keep the UE context information, hence knows the UE preferences.

### Network/eNB/gNB behaviour

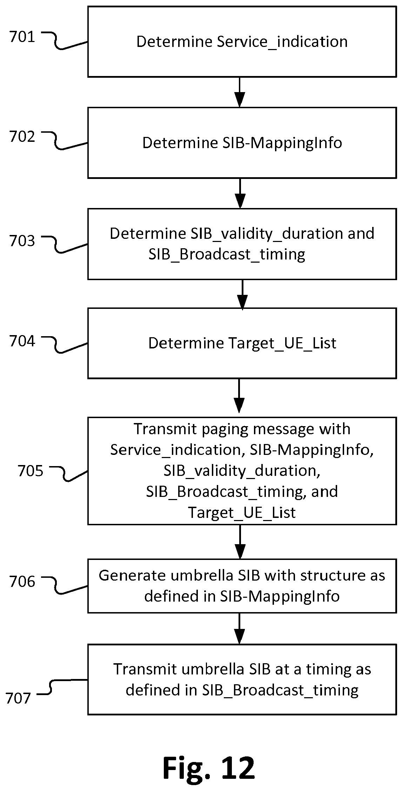

Fig. 12 shows a process of a network/eNB/gNB pushing system information (SI). At 701, the network/eNB/gNB determines Service_indication IE according to the service to which the push SI to be transmitted relates. At 702, the network/eNB/gNB determines the structure of the push SI and sets the bits in SIB-MappingInfo accordingly. At 703, the network/eNB/gNB determines the timing and the validity duration of the SIB transmission and sets SIB_validity_duration and SIB_Broadcast_timing accordingly. At 704, the network/eNB/gNB determines the target UE/UAVs at which the network push SI is directed at and sets Target_UE_List accordingly. At 705, the network/eNB/gNB the network/eNB/gNB transmits a paging message with the information elements Service_indication, SIB-MappingInfo, SIB_validity_duration, SIB_Broadcast_timing, and Target_UE_List. At 706, the network/eNB/gNB generates an umbrella SIB with the structure as defined in SIB-MappingInfo. At 707, the network/eNB/gNB transmits the umbrella SIB at a timing as defined in SIB_Broadcast_timing. The umbrella SIB may be transmitted as a "normal" SIB, e.g. by including the scheduling information in SIB1 and by scheduling the transmission of the umbrella SIB accordingly. Delta signaling may be supported.

The umbrella SIB may be cell specific, so only the cell who wants to deliver the special service related SI initiates the transmission. In order to address all the inactive UE/UAVs in the cell, the paging message may be sent on every paging occasion, which are listed in the Paging_record_list (see Fig. 5).

Alternatively, the umbrella SIB may be applicable to slices as well. Each slice may include several services. In that case, multiple SIBs may be included. Hence it is up to network's implementation that to include multiple SIBs information in one paging notification or send multiple paging messages.

### UE behaviour

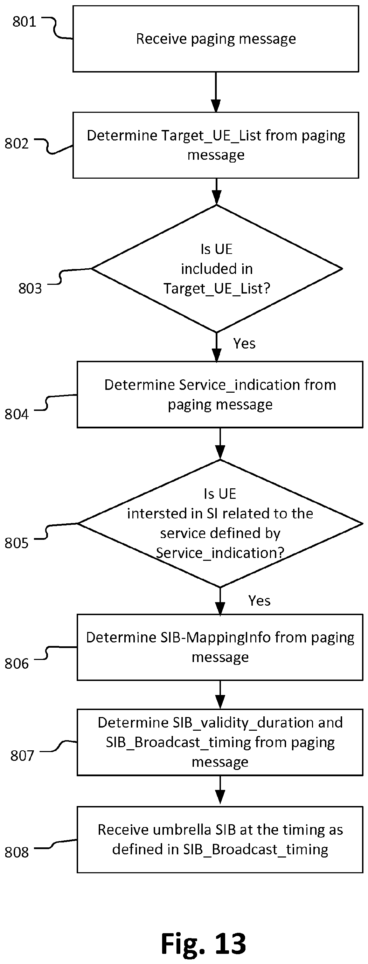

Fig. 13 shows a process of a UE receiving a paging message. At 801, the UE receives a paging message. At 802, the UE determines the Target_UE_List from the paging message. At 803, the UE checks if it is included in the Target_UE_List. If yes, the UE continues at 804. If no, the UE discards the paging message. At 804, the UE determine the type of service to which the push SI relates based on the Service_indication included in the paging message. At 805, the UE decides if it is interested in SI related to the service defined by Service_indication. For example, if the UE has the positioning capability, then the UE may be interested in positioning related umbrella SIB or if the UE is an UAV, then the UAV related umbrella SIB may be received. If yes, the UE proceeds at 806. If no, the UE discards the paging message. Still further the UE may have stored an identical umbrella SIB before. For example, in order to check whether the UE has stored an identical umbrella SIB, the UE may compare the ID of the umbrella SIB that is provided in the SIB_MappingInfo information element (see Fig. 7) with previously stored information. If the UE finds that it has the push SI already available, then it will decide at 805 that it is not interested in receiving the network push SI (umbrella SIB). At 806, the UE determines the structure of the push SI by parsing the SIB-MappingInfo included in the paging message. At 807, the UE determines the SIB_validity_duration and SIB_Broadcast_timing from the paging message. At 808, the UE receives the umbrella SIB at the timing as defined in SIB_Broadcast_timing. After receiving the umbrella SIB, the UE will record its validity duration as defined by SIB_validity_duration.

### "Network Push" of system information (SI) using paging notifications in the RRC idle state and RRC connected state

The embodiments described above describe the "Network Push" of system information (SI) using paging notifications in the RRC inactive state. The same principles can also be used to push system information (SI) to UEs in the RRC idle state and RRC connected state.

For UEs in the RRC idle state, it is impossible to include the target UE list as the network does not have UE preference information (RAN area UE identifiers) in idle state. The target UE list is optional and is not transmitted in this case. For the UEs in RRC connected state, the paging message will be addressed to the specific UEs by sending them on the paging occasions corresponding to those specific UEs.

### Implementation

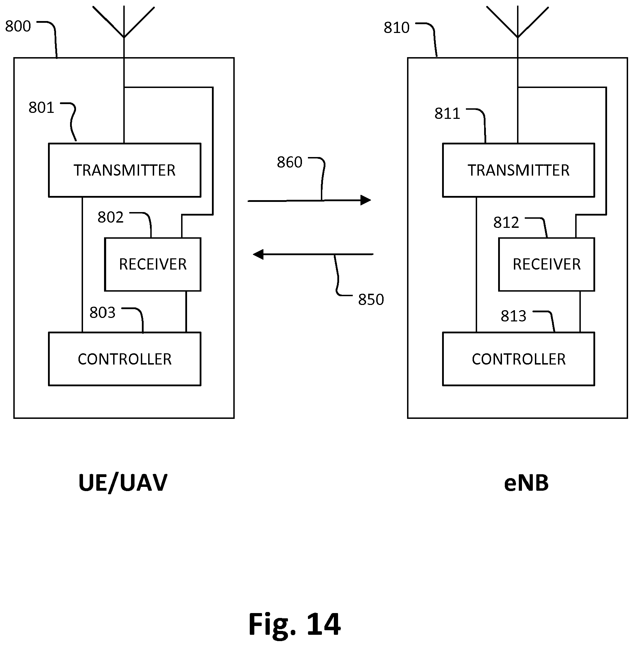

Fig. 14 shows a schematic block diagram of a communications path between an UE/UAV 800 and an eNB/gNB 810. As shown in Fig. 14 the UE/UAV includes a transmitter 801 a receiver 802 and a controller 803 to control the transmission of signals to the eNB/gNB and the reception. The Uplink signals are represented by an arrow 860. Downlink signals are shown by an arrow 850. The eNB/gNB 810 includes a transmitter 811 a receiver 812 and a controller 813 which may include a scheduler for scheduling the transmission and reception of signals on the downlink and the uplink in accordance with a wireless access interface.

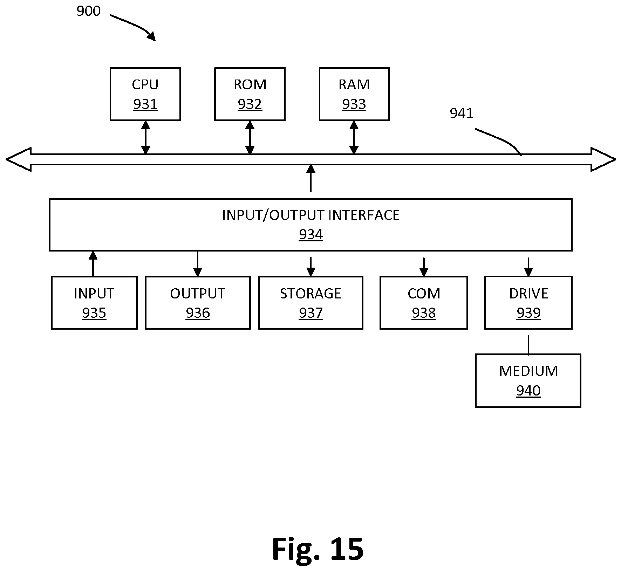

An embodiment of a controller 900 is described under reference of Fig. 15. This controller 900 can be implemented such that it can basically function as any type of apparatus or entity, base station or new radio base station, transmission and reception point, or user equipment as described herein. Controller 900 can thus act as controller 803 or as controller 813 of Fig. 14. The controller 900 has components 931 to 940, which can form a circuitry, such as any one of the circuitries of the entities, base stations, and user equipment, as described herein.

Embodiments which use software, firmware, programs or the like for performing the methods as described herein can be installed on controller 900, which is then configured to be suitable for the concrete embodiment.

The controller 900 has a CPU 931 (Central Processing Unit), which can execute various types of procedures and methods as described herein, for example, in accordance with programs stored in a read-only memory (ROM) 932, stored in a storage 937 and loaded into a random access memory (RAM) 933, stored on a medium 940, which can be inserted in a respective drive 939, etc.

The CPU 931, the ROM 932 and the RAM 933 are connected with a bus 941, which in turn is connected to an input/output interface 934. The number of CPUs, memories and storages is only exemplary, and the skilled person will appreciate that the controller 900 can be adapted and configured accordingly for meeting specific requirements which arise when it functions as a base station, and user equipment.

At the input/output interface 934, several components are connected: an input 935, an output 936, the storage 937, a communication interface 938 and the drive 939, into which a medium 940 (compact disc, digital video disc, compact flash memory, or the like) can be inserted.

The input 935 can be a pointer device (mouse, graphic table, or the like), a keyboard, a microphone, a camera, a touchscreen, etc. The output 936 can have a display (liquid crystal display, cathode ray tube display, light emittance diode display, etc.), loudspeakers, etc. The storage 937 can have a hard disk, a solid state drive and the like.

The communication interface 938 can be adapted to communicate, for example, via a local area network (LAN), wireless local area network (WLAN), mobile telecommunications system (GSM, UMTS, LTE, etc.), Bluetooth, infrared, etc. When the controller 900 functions as a base station, the communication interface 938 can further have a respective air interface (providing e.g. E-UTRA protocols OFDMA (downlink) and SC-FDMA (uplink)) and network interfaces (implementing for example protocols such as S1-AP, GTP-U, S1-MME, X2-AP, or the like). Moreover, the controller 900 may have one or more antennas and/or an antenna array. The present disclosure is not limited to any particularities of such protocols.

It should be recognized that the embodiments describe methods with an exemplary ordering of method steps. The specific ordering of method steps is however given for illustrative purposes only and should not be construed as binding. For example the ordering of the process steps 701 to 704 in Figs. 12 and the process steps in Fig. 13 may be changed. Other changes of the ordering of method steps may be apparent to the skilled person.

It should also be noted that the division of the control or circuitry of Fig. 15 into units 931 to 940 is only made for illustration purposes and that the present disclosure is not limited to any specific division of functions in specific units. For instance, at least parts of the circuitry could be implemented by a respective programmed processor, field programmable gate array (FPGA), dedicated circuits, and the like.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

## Claims

1. An infrastructure equipment (200; 300) comprising circuitry configured to transmit a paging message to a user equipment, the paging message comprising information provided to notify the user equipment that the infrastructure equipment will send system information to the user equipment, and
wherein the information comprises a system information validity duration information and a system information broadcast timing information,
wherein the circuitry is configured to broadcast the system information to the user equipment, after receipt of the paging message by the user equipment, dynamically or temporarily, according to the system information validity duration information and a system information broadcast timing information contained in the paging message.

2. The infrastructure equipment of claim 1, wherein the circuitry is configured to broadcast the paging message to user equipment in an RRC idle state.

3. The infrastructure equipment of claim 1, wherein the circuitry is configured to broadcast the paging message to user equipment in an RRC connected state.

4. The infrastructure equipment of claim 1, wherein the information comprises service indication information.

5. The infrastructure equipment of claim 1, wherein the information comprises SIB structure information.

6. The infrastructure equipment of claim 1, wherein the information comprises a target list information.

7. The infrastructure equipment of claim 1, wherein the circuitry is configured to send system information corresponding to the information in the paging message to user equipment.

8. The infrastructure equipment of claim 7, wherein the circuitry is configured to transmit the system information in the form of a SIB.

9. The infrastructure equipment of claim 1, wherein the SIBs includes system information related to a new service.

10. An electronic device comprising circuitry configured to receive a paging message from an infrastructure equipment, the paging message comprising information provided to notify the electronic device that the infrastructure equipment will send system information to the user equipment,
wherein the information comprises a system information validity duration information and a system information broadcast timing information, and
wherein the system information is received by the electronic device dynamically or temporarily, after receipt of the paging message, corresponding to the the system information validity duration information and a system information broadcast timing information in the paging message and the electronic device record the system information validity duration information.

11. The electronic device of claim 10, wherein the circuitry is configured to receive the system information in the form of a SIB.

12. The electronic device of claim 10, wherein the electronic device is an unmanned aerial vehicle.

13. A method comprising transmitting a paging message from an infrastructure equipment to a user equipment, the paging message comprising information provided to notify the user equipment that the infrastructure equipment will send system information to the user equipment,
wherein the information comprises a system information validity duration information and a system information broadcast timing information, and
wherein the system information is broadcast from the infrastructure equipment to the user equipment, after receipt of the paging message by the user equipment, dynamically or temporarily, according to the system information validity duration information and a system information broadcast timing information contained in the paging message.

## Patentansprüche

1. Infrastrukturausrüstung (200; 300), umfassend eine Schaltlogik, die konfiguriert ist, um eine Funkrufnachricht an eine Benutzerausrüstung zu übertragen, wobei die Funkrufnachricht Informationen umfasst, die bereitgestellt sind, um die Benutzerausrüstung zu benachrichtigen, dass die Infrastrukturausrüstung Systeminformationen an die Benutzerausrüstung senden wird, und
wobei die Informationen eine Systeminformationsgültigkeitsdauer-Information und eine Systeminformationsrundsendungszeitpunkt-Information umfassen,
wobei die Schaltlogik konfiguriert ist, um die Systeminformationen nach Empfang der Funkrufnachricht durch die Benutzerausrüstung dynamisch oder vorübergehend an die Benutzerausrüstung zu rundzusenden, gemäß der Systeminformationsgültigkeitsdauer-Information und einer Systeminformationsrundsendungszeitpunkt-Information, die in der Funkrufnachricht enthalten sind.

2. Infrastrukturausrüstung nach Anspruch 1, wobei die Schaltlogik konfiguriert ist, um die Funkrufnachricht an eine Benutzerausrüstung in einem RRC-Leerlaufzustand rundzusenden.

3. Infrastrukturausrüstung nach Anspruch 1, wobei die Schaltlogik konfiguriert ist, um die Funkrufnachricht an die Benutzerausrüstung in einem RRC-Verbindungszustand rundzusenden.

4. Infrastrukturausrüstung nach Anspruch 1, wobei die Informationen Dienstanzeigeinformationen umfassen.

5. Infrastrukturausrüstung nach Anspruch 1, wobei die Informationen SIB-Strukturinformationen umfassen.

6. Infrastrukturausrüstung nach Anspruch 1, wobei die Informationen eine Ziellisteninformation umfassen.

7. Infrastrukturausrüstung nach Anspruch 1, wobei die Schaltlogik konfiguriert ist, um Systeminformationen, die den Informationen in der Funkrufnachricht entsprechen, an die Benutzerausrüstung zu senden.

8. Infrastrukturausrüstung nach Anspruch 7, wobei die Schaltlogik konfiguriert ist, um die Systeminformationen in Form eines SIB zu übertragen.

9. Infrastrukturausrüstung nach Anspruch 1, wobei die SIBs Systeminformationen einschließen, die sich auf einen neuen Dienst beziehen.

10. Elektronische Vorrichtung, umfassend eine Schaltlogik, die konfiguriert ist, um eine Funkrufnachricht von einer Infrastrukturausrüstung zu empfangen, wobei die Funkrufnachricht Informationen umfasst, die bereitgestellt sind, um die elektronische Vorrichtung zu benachrichtigen, dass die Infrastrukturausrüstung Systeminformationen an die Benutzerausrüstung senden wird,
wobei die Informationen eine Systeminformationsgültigkeitsdauer-Information und eine Systeminformationsrundsendungszeitpunkt-Information umfassen, und
wobei die Systeminformationen von der elektronischen Vorrichtung dynamisch oder vorübergehend empfangen werden, nach Empfang der Funkrufnachricht, entsprechend der Systeminformationsgültigkeitsdauer-Information und einer Systeminformationsrundsendungszeitpunkt-Information in der Funkrufnachricht, und die elektronische Vorrichtung die Systeminformationsgültigkeitsdauer-Information aufzeichnet.

11. Elektronische Vorrichtung nach Anspruch 10, wobei die Schaltlogik konfiguriert ist, um die Systeminformationen in Form eines SIB zu empfangen.

12. Elektronische Vorrichtung nach Anspruch 10, wobei die elektronische Vorrichtung ein unbemanntes Luftfahrzeug ist.

13. Verfahren, umfassend das Übertragen einer Funkrufnachricht von einer Infrastrukturausrüstung an eine Benutzerausrüstung, wobei die Funkrufnachricht Informationen umfasst, die bereitgestellt sind, um die Benutzerausrüstung zu benachrichtigen, dass die Infrastrukturausrüstung Systeminformationen an die Benutzerausrüstung senden wird,
wobei die Informationen eine Systeminformationsgültigkeitsdauer-Information und eine Systeminformationsrundsendungszeitpunkt-Information umfassen, und
wobei die Systeminformationen von der Infrastrukturausrüstung an die Benutzerausrüstung nach dem Empfang der Funkrufnachricht durch die Benutzerausrüstung dynamisch oder vorübergehend an die Benutzerausrüstung gesendet werden, gemäß der Systeminformationsgültigkeitsdauer-Information und einer Systeminformationsrundsendungszeitpunkt-Information, die in der Funkrufnachricht enthalten sind.

## Revendications

1. Équipement d'infrastructure (200 ; 300) comprenant un ensemble de circuits configuré pour transmettre un message de radiomessagerie à un équipement utilisateur, le message de radiomessagerie comprenant des informations fournies pour notifier l'équipement utilisateur que l'équipement d'infrastructure va envoyer des informations système à l'équipement utilisateur, et
dans lequel les informations comprennent des informations de durée de validité d'informations système et des informations de temporisation de diffusion d'informations système,
dans lequel l'ensemble de circuits est configuré pour diffuser les informations système à l'équipement utilisateur, après réception du message de radiomessagerie par l'équipement utilisateur, dynamiquement ou temporairement, selon les informations de durée de validité d'informations système et des informations de temporisation de diffusion d'informations système contenues dans le message de radiomessagerie.

2. Équipement d'infrastructure selon la revendication 1, dans lequel l'ensemble de circuits est configuré pour diffuser le message de radiomessagerie à un équipement utilisateur dans un état de repos RRC.

3. Équipement d'infrastructure selon la revendication 1, dans lequel l'ensemble de circuits est configuré pour diffuser le message de radiomessagerie à un équipement utilisateur dans un état connecté RRC.

4. Équipement d'infrastructure selon la revendication 1, dans lequel les informations comprennent des informations d'indication de service.

5. Équipement d'infrastructure selon la revendication 1, dans lequel les informations comprennent des informations de structure SIB.

6. Équipement d'infrastructure selon la revendication 1, dans lequel les informations comprennent des informations de liste cible.

7. Équipement d'infrastructure selon la revendication 1, dans lequel l'ensemble de circuits est configuré pour envoyer des informations système correspondant aux informations dans le message de radiomessagerie à un équipement utilisateur.

8. Équipement d'infrastructure selon la revendication 7, dans lequel l'ensemble de circuits est configuré pour transmettre les informations système sous la forme d'un SIB.

9. Équipement d'infrastructure selon la revendication 1, dans lequel les SIB comportent des informations système se rapportant à un nouveau service.

10. Dispositif électronique comprenant un ensemble de circuits configuré pour recevoir un message de radiomessagerie en provenance d'un équipement d'infrastructure, le message de radiomessagerie comprenant des informations fournies pour notifier le dispositif électronique que l'équipement d'infrastructure va envoyer des informations système à l'équipement utilisateur,
dans lequel les informations comprennent des informations de durée de validité d'informations système et des informations de temporisation de diffusion d'informations système, et
dans lequel les informations système sont reçues par le dispositif électronique dynamiquement ou temporairement, après réception du message de radiomessagerie, correspondant aux informations de durée de validité d'informations système et à des informations de temporisation de diffusion d'informations système dans le message de radiomessagerie et le dispositif électronique enregistre les informations de durée de validité d'informations système.

11. Dispositif électronique selon la revendication 10, dans lequel l'ensemble de circuits est configuré pour recevoir les informations système sous la forme d'un SIB.

12. Dispositif électronique selon la revendication 10, dans lequel le dispositif électronique est un véhicule aérien sans pilote.

13. Procédé comprenant la transmission d'un message de radiomessagerie à partir d'un équipement d'infrastructure vers un équipement utilisateur, le message de radiomessagerie comprenant des informations fournies pour notifier l'équipement utilisateur que l'équipement d'infrastructure va envoyer des informations système à l'équipement utilisateur,
dans lequel les informations comprennent des informations de durée de validité d'informations système et des informations de temporisation de diffusion d'informations système, et
dans lequel les informations système sont diffusées à partir de l'équipement d'infrastructure vers l'équipement utilisateur, après réception du message de radiomessagerie par l'équipement utilisateur, dynamiquement ou temporairement, selon les informations de durée de validité d'informations système et des informations de temporisation de diffusion d'informations système contenues dans le message de radiomessagerie.
